# EUROPÄISCHE PATENTANMELDUNG

(11) **EP 1 343 212 A2**
(43) Veröffentlichungstag der Anmeldung: **10.09.2003**
(21) Anmeldenummer: 03003828.5
(22) Anmeldetag: 20.02.2003
(51) Int. Cl.: H01M 2/34

(54) **Batterieverpolschutz**

(30) Priorität: 08.03.2002 DE 10210373
(71) Anmelder: Patent-Treuhand-Gesellschaft für elektrische Glühlampen mbH, 81543 München (DE)
(72) Erfinder: Schadhauser, Klaus, 81927 München (DE)

(57) **Zusammenfassung**

Die vorliegende Erfindung betrifft einen Batterieverpolschutz, insbesondere Batterieverpolschutz für Batterietaschenleuchten. Der Batterieverpolschutz 10 besteht dabei aus mindestens einem Abstandselement 12, wobei das Abstandselement 12 innerhalb eines Batteriefachs 14 jeweils im Bereich mindestens eines Kontaktes 16 für mindestens einen Anodendom 20 mindestens einer Batterie 18 oder im Bereich eines Endes mindestens einer Kontaktfeder oder -lasche 22, die zur Kontaktierung mit dem Anodendom 20 dient, ausgebildet ist. Das Abstandelement 12 ist derart dimensioniert, dass es über den Kontakt 16 oder die Kontaktfeder oder -lasche 22 in Richtung der Batterie 18 hinausragt, wobei der durch den Kontakt 16 oder die Kontaktfeder oder -lasche 22 mit dem aufliegenden Anodendom 20 gebildete Abstand (A) größer ist als die Höhe (B) des über den Kontakt 16 oder die Kontaktfeder oder -lasche 22 in Richtung der Batterie 18 hinausragen Bereichs des Abstandelements 12.

## Beschreibung

### Technisches Gebiet

Die Erfindung geht aus von einem Batterieverpolschutz, insbesondere einem Batterieverpolschutz für Batterietaschenleuchten gemäß dem Oberbegriff des Anspruchs 1.

### Stand der Technik

Die in batteriebetriebenen elektrischen Geräten ausgebildeten Batteriefächer sind üblicherweise nicht gegen das falsche Einlegen der Batterien, das heißt ein verpoltes Einlegen der Batteriezellen gesichert. So lässt es zum Beispiel die in Batterietaschenleuchten übliche Batteriefachgeometrie zu, die Batteriezellen verpolt einzulegen. Wird zum Beispiel bei einer Taschenleuchte für vier Mignonzellen eine Zelle verpolt eingelegt, so ist zwar ein Betrieb der Lampe mit niedrigerer Leistung gewährleistet. Gleichzeitig wird aber die verpolte Batteriezelle in entgegengesetzter Stromrichtung betrieben. Dies hat nachteiligerweise zur Folge, dass die Batteriezelle zerstört wird und eventuell ausläuft, so dass weitere Schäden an dem elektrischen Gerät auftreten.

Bisher wurde versucht, durch zum Beispiel eine auffällige Beschriftung der Batterien sowie der entsprechenden Batteriefächer, ein verpoltes Einlegen der Batterien zu verhindern. Auch durch entsprechende Hinweise in der Bedienungsanleitung des elektrischen Gerätes oder durch Beigabe von besonderen Hinweiszetteln wurde versucht, dem Anwender eine sachgerechte Handhabung darzulegen. Des weiteren ist aus der Deutschen Offenlegungsschrift DE 100 02 751 A1 eine falschpolresistente modifizierte Haushaltbatterie beschrieben, bei der die Batterie selbst definiert angeordnete Rastaussparungen aufweist, welche im funktionalen Zusammenspiel mit entsprechenden Rasterhebungen in den Batteriefächern ein verpoltes Einlegen der Batterie verhindert werden soll. Nachteilig hierbei ist jedoch, dass hier eine Modifikation der Batterie stattfindet, so dass handels- und haushaltsübliche Batterien nicht verwendet werden können.

### Darstellung der Erfindung

Es ist Aufgabe der vorliegenden Erfindung, einen Batterieverpolschutz, insbesondere einen Batterieverpolschutz für Batterietaschenleuchten bereitzustellen, der einen einfachen und sicheren Schutz gegen ein verpoltes Einlegen von Batterien in entsprechende Batteriefächer von elektrischen Geräten und somit einen Stromfluss in falscher Richtung und ein eventuelles Auslaufen der Batterie verhindert.

Diese Aufgabe wird bei einem Batterieverpolschutz mit den Merkmalen des Oberbegriffs des Anspruchs 1 durch die Merkmale des kennzeichnenden Teils des Anspruchs 1 gelöst. Besonders vorteilhafte Ausgestaltungen finden sich in den abhängigen Ansprüchen.

Ein erfindungsgemäßer Batterieverpolschutz, insbesondere ein Batterieverpolschutz für Batterietaschenleuchten besteht aus mindestens einem Abstandselement, wobei das Abstandselement innerhalb eines Batteriefachs jeweils im Bereich mindestens eines Kontaktes für mindestens einen Anodendom mindestens einer Batterie oder im Bereich des Endes mindestens einer Kontaktfeder oder -lasche, die zur Kontaktierung mit dem Anodendom dient, ausgebildet ist. Dabei ist erfindungsgemäß das Abstandselement derart dimensioniert, dass es über den Kontakt oder die Kontaktfeder oder-lasche in Richtung der Batterie hinausragt, wobei der durch den Kontakt oder die Kontaktfeder oder -lasche mit dem aufliegenden Anodendom gebildete Abstand (A) größer ist als die Höhe (B) des über den Kontakt oder die Kontaktfeder oder -lasche in Richtung der Batterie hinausragenden Bereichs des Abstandselementes. Durch das erfindungsgemäße Anbringen eines mechanischen Verpolschutzes kann zuverlässig verhindert werden, dass bei verpolt eingelegter Batterie ein Kontakt zustande kommt. Dadurch wird vorteilhafterweise ein Stromfluss in falscher Richtung und ein Auslaufen der Batterie verhindert. Nur bei einem richtigen Einlegen der Batterie, das heißt einer polgerechten Kontaktierung des Anodendoms mit dem entsprechenden Kontakt erfolgt ein Stromfluss. Bei einer verpolt eingelegten Batterie verhindert das Abstandselement einen stromleitenden Kontakt zwischen den Anschlüssen innerhalb des Batteriefaches und den Polen der Batterie. Durch die Anordnung des Abstandselementes im Bereich des Kontakts beziehungsweise des Anschlusses für den Anodendom beziehungsweise im Bereich des Endes einer Kontaktfeder oder -lasche, die zur Kontaktierung mit dem Anodendom dient, ist gewährleistet, dass das Abstandselement bei verpolt eingelegter Batterie immer an einer dem Anodendom gegenüberliegenden Auflagefläche, üblicherweise einer Kathodenplatte zu liegen kommt. Dabei besteht das Abstandselement vorteilhafterweise aus elektrisch nicht-leitendem Material. Der Kontakt für den Anodendom kann linsenartig ausgebildet sein.

In einer vorteilhaften Ausgestaltung der vorliegenden Erfindung ist das beziehungsweise sind die Abstandselemente in einer Verschlusskappe eines Batteriefachs einer Taschenleuchte angeordnet. Dadurch wird zuverlässig ein Auslaufen einer falsch eingelegten Batterie beziehungsweise von falsch eingelegten Batterien verhindert, so dass eine Zerstörung der Taschenleuchte durch verpolt eingelegte Batterien ausgeschlossen werden kann.

### Beschreibung der Zeichnungen

Im folgenden soll die Erfindung anhand mehrerer Ausführungsbeispiele näher erläutert werden. Es zeigen:
- Figur 1: eine schematische Darstellung eines erfindungsgemäßen Batterieverpolschutzes;
- Figur 2: ein weiteres Ausführungsbeispiel des erfindungsgemäßen Batterieverpolschutzes; und
- Figur 3: ein weiteres Ausführungsbeispiel des erfindungsgemäßen Batterieverpolschutzes

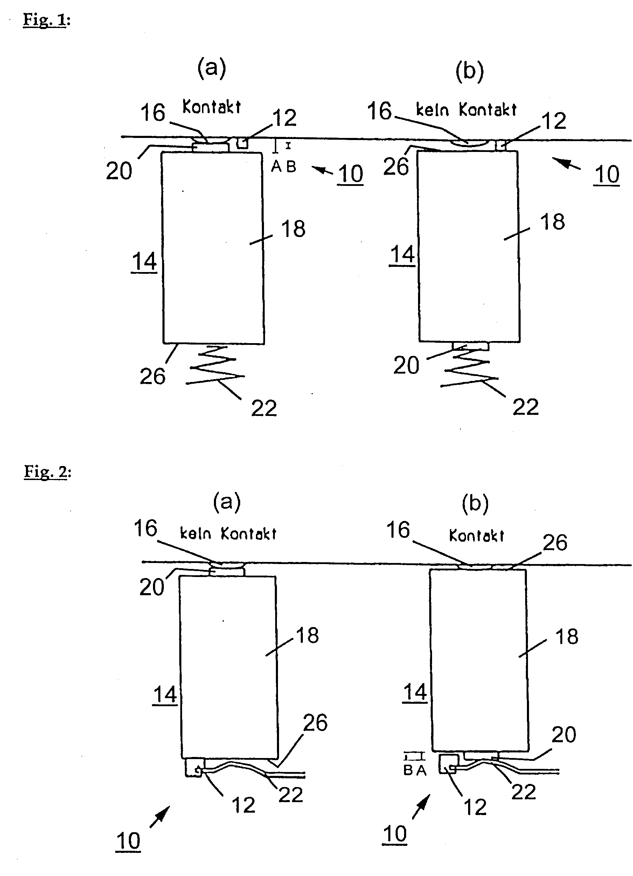

Figur 1 zeigt eine schematische Darstellung eines ersten Ausführungsbeispiels eines Batterieverpolschutzes 10. Man erkennt, dass der Batterieverpolschutz 10 aus einem Abstandselement 12 besteht, wobei das Abstandselement 12 innerhalb eines Batteriefachs 14 im Bereich eines linsenförmigen Kontaktes 16 für einen Anodendom 20 einer Batterie 18 ausgebildet ist. Aus den Figuren 1a und 1b erkennt man, dass das Abstandselement über den Kontakt 16 in Richtung der Batterie 18 hinausragt. Dabei ist jedoch der Abstand A, der durch die Höhe des Kontaktes 16 und die Höhe des auf dem Kontakt 16 aufliegenden Anodendoms 20 gebildet wird, größer als die Höhe B des über den Kontakt 16 in Richtung der Batterie 18 hinausragenden Bereichs des Abstandselementes 12. Dies bedeutet, dass bei einem polgerechten Einlegen der Batterie 18 der Anodendom 20 richtigerweise auf dem Kontakt 16 zu liegen kommt und mit diesem zusammen einen Abstand A ausbildet, der größer ist als die Höhe des Abstandselementes 12, so dass Letzteres nicht mit der Batterie 18 in Berührung kommt (vergleiche Figur 1a). Bei verpolt eingelegter Batterie 18 kommt das Abstandselement 12 in Berührung mit einer Kathodenfläche beziehungsweise -platte 26 der Batterie 18 und verhindert durch seine Dimensionierung, dass es zwischen dem Kontakt 16 und der Kathodenplatte 26 zu einem elektrisch leitenden Kontakt und damit zu einem Stromfluss kommt (vergleiche Figur 1b).

Das Abstandselement 12 besteht dabei üblicherweise aus elektrischen nicht-leitendem Material, wie zum Beispiel Kunststoff. Zudem können die Abstandselemente 12 rippenförmig und/oder zylinderförmig und/oder linsenförmig und/oder quadratisch und/oder rechteckig und/oder rautenförmig ausgebildet sein. Auch jede andere geeignete dreidimensionale Struktur kann für die Ausgestaltung des Abstandselementes 12 verwendet werden.

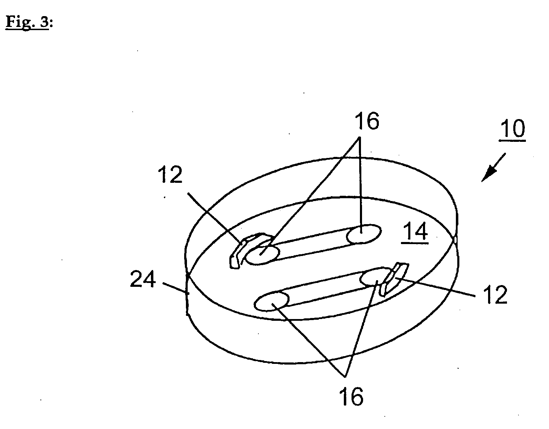

Der Kontakt 16 für den Anodendom 20 ist in den Ausführungsbeispielen gemäß den Figuren 1 und 2 linsenförmig dargestellt. Es sind jedoch auch andere Geometrien für den Kontakt 16 denkbar (vergleiche Figur 3). Das Abstandselement 12 ragt bei üblichen Anwendungen um 0,3 mm bis 0,7 mm über den Kontakt 16 in Richtung der Batterie 18 hinaus.

Figur 2 zeigt eine schematische Darstellung eines weiteren Ausführungsbeispiels des Batterieverpolschutzes 10. Man erkennt, dass der Batterieverpolschutz 10 gemäß diesem Ausführungsbeispiel im Bereich eines Endes einer Kontaktfeder oder -lasche 22, die zur Kontaktierung mit dem Anodendom 20 dient, ausgebildet ist. Dabei ist das Abstandselement 12 wiederum derart dimensioniert, dass es über die Kontaktfeder oder -lasche 22 in Richtung der Batterie hinausragt. So verhindert das Abstandselement 12 bei einer verpolt eingelegten Batterie 18 einen Kontakt zwischen der Kontaktfeder oder-lasche 22 und der Kathodenplatte 26 der Batterie 18 (vergleiche Figur 2a). Nur bei einer polgerechten Einführung der Batterie 18 in das Batteriefach 14 kommt es zu einem Kontakt und damit zu einem Stromfluss zwischen dem Kontakt 16 und der Kontaktfeder oder -lasche 22. Dies ist in Figur 2a dargestellt. Man erkennt aus dieser Figur, dass wiederum der durch die Kontaktfeder oder -lasche 22 mit dem aufliegenden Anodendom 20 gebildete Abstand A größer ist als die Höhe B des über die Kontaktfeder oder -lasche 22 in Richtung der Batterie 18 hinausragenden Bereichs des Abstandselementes 12. Die Anordnung des Abstandselementes 12 im Bereich des Endes der Kontaktfeder oder -lasche 22 ist dabei derart gewählt, dass das Abstandselement 12 gegebenenfalls immer auf der Kathodenfläche 26 der Batterie 18 zu liegen kommt.

Figur 3 zeigt eine schematische Darstellung eines weiteren Ausführungsbeispiels des Batterieverpolschutzes 10. Insbesondere ist hier ein Batterieverpolschutz 10 für Batterietaschenleuchten dargestellt. Man erkennt, dass die Abstandselemente 12 in einer Verschlusskappe 24 eines Batteriefachs 14 einer Taschenleuchte angeordnet sind. Die Abstandselemente 12 sind wiederum im Bereich der Kontakte 16, die in diesem Ausführungsbeispiel flach ausgebildet sind, angeordnet, wobei die Kontakte 16 zur Kontaktierung entsprechender Anodendome von Batterien dienen.

Der Batterieverpolschutz 10 kann für alle handels- und/oder haushaltsüblichen Batterien verwendet werden. Beispielhaft seien hier Batterien der Typen "Mono", "Baby", "Mignon", "Micro", "Lady" sowie Block-, Duplex- und Blockbatterien sowie Knopfzellen genannt.

## Patentansprüche

1. Batterieverpolschutz, insbesondere Batterieverpolschutz für Batterietaschenleuchten, **dadurch gekennzeichnet, dass** der Batterieverpolschutz (10) aus mindestens einem Abstandselement (12) besteht, wobei das Abstandselement (12) innerhalb eines Batteriefachs (14) jeweils im Bereich mindestens eines Kontaktes (16) für mindestens einen Anodendom (20) mindestens einer Batterie (18) oder im Bereich eines Endes mindestens einer Kontaktfeder oder -lasche (22), die zur Kontaktierung mit dem Anodendom (20) dient, ausgebildet ist und das Abstandelement (12) derart dimensioniert ist, dass es über den Kontakt (16) oder die Kontaktfeder oder -lasche (22) in Richtung der Batterie (18) hinausragt, wobei der durch den Kontakt (16) oder die Kontaktfeder oder-lasche (22) mit dem aufliegenden Anodendom (20) gebildete Abstand (A) größer ist als die Höhe (B) des über den Kontakt (16) oder die Kontaktfeder oder -lasche (22) in Richtung der Batterie (18) hinausragen Bereichs des Abstandelements (12).

2. Batterieverpolschutz gemäß Anspruch 1, **dadurch gekennzeichnet, dass** das Abstandelement (12) aus elektrisch nicht-leitendem Material besteht.

3. Batterieverpolschutz gemäß einem der Ansprüche 1 oder 2, **dadurch gekennzeichnet, dass** der Kontakt (16) linsenartig ausgebildet ist.

4. Batterieverpolschutz gemäß einem der vorstehenden Ansprüche, **dadurch gekennzeichnet, dass** der bzw. die Abstandselemente (12) in einer Verschlusskappe (24) eines Batteriefachs einer Taschenleuchte angeordnet ist bzw. sind.

5. Batterieverpolschutz gemäß einem der vorstehenden Ansprüche, **dadurch gekennzeichnet, dass** der bzw. die Abstandselemente (12) rippenförmig und/oder zylinderförmig und/oder linsenförmig und/oder quadratisch und/oder rechteckig und/oder rautenförmig ausgebildet ist bzw. sind.

6. Batterieverpolschutz gemäß einem der vorstehenden Ansprüche, **dadurch gekennzeichnet, dass** das Abstandselement (12) um 0,3 mm bis 0,7 mm über den Kontakt (16) oder die Kontaktfeder oder -lasche (22) in Richtung der Batterie (18) hinausragt.

7. Batterieverpolschutz gemäß einem der vorstehenden Ansprüche, **dadurch gekennzeichnet, dass** die Batterie (18) eine handels- und/oder haushaltsübliche Batterie ist.
